# EUROPEAN PATENT APPLICATION

(11) **EP 1 686 284 A1**
(43) Date of publication of application: **02.08.2006**
(21) Application number: 05425030.3
(22) Date of filing: 26.01.2005
(51) Int. Cl.: F16F 9/348, F16F 9/34, F16F 9/512

(54) **Shock absorber piston with incorporated valve unit**

(71) Applicant: Arvinmeritor Suspension Systems S.r.l., 14100 Asti (IT)
(72) Inventor: Tommei, Gianfranco, 14100 Asti (IT)
(74) Representative: Spandonari, Carlo

(57) **Abstract**

The piston is sealingly slidable within a shock absorber cylinder (10) to separate it into two opposing chambers (14, 114, 16, 116). The piston comprises a cylindrical housing (18, 118) having fluid communication passages (18a, 144) between the two chambers. A flow-regulation ring (28, 128) is coaxially mounted on the housing (18, 118) and has profiled cuts (36, 136) interposed in series with respect to said passages. A shutter (49, 149) is sealingly slidable within the flow-regulation ring (28, 128) to gradually shut the profiled cuts (36, 136) and is subjected to the pressure of one of the chambers (14, 114) against elastic means (50, 150).

## Description

The present invention relates to a shock absorber piston with incorporated valve unit, particularly for wheel suspensions of vehicles.

Modem vehicles are mounted on wheel suspensions comprising a system of springs and shock absorbers adapted to lessen the shocks due to unevenness of the road.

A shock absorber typically comprises a hydraulic cylinder filled with oil with a piston slidable therein which is supported on a piston rod. The cylinder is operatively connected to the wheel suspension for extending or withdrawing in relation to the fluctuations and jerks of the vehicle when running on the road. The piston separates the cylinder into two chambers and is provided with a valve assembly through which the fluid is drained from one chamber to the other when the piston slides within the cylinder. The resistance opposed to the fluid flow by the valve assembly provides the desired damping force that contrasts the motion of the piston within the cylinder.

In a known valve assembly, which is adapted to damp the motion of the piston rod during the so-called "bouncing" stage in which the cylinder is extended, the piston has an axial cavity having a inner, annular abutment. A stack of shutter disks are axially supported on the piston upstream of the abutment with respect to the chamber that is to be pressurized when the cylinder is extended, and are elastically biased against the annular abutment by a preloaded spring.

When the cylinder is pulled to extend, the pressure in the pressurized chamber rises as a function of the speed of the piston within the cylinder. When running on even roads, the cylinder is subjected to slow, alternative fluctuations. Thus, the pressure in the pressurized chamber does not exceed the preload of the spring and the oil can only drain through a thin low-flow port between the shutter disks and the abutment through which the fluid is drained. By contrast, when running on uneven roads or crossing any localized obstacles such as rails, holes and hump bridges, the wheel suspensions and the cylinder are subjected to impulsive shocks. Thus, the pressure in the chamber exceeds the preload of the spring and the stack of disks disengage the abutment so that an annular port is opened between the disks and the abutment, through which the fluid is drained.

Although the above-described valve unit is capable of varying its dynamic response in relation to the running conditions, it has a main drawback that the relation between the damping force and the piston speed, in case of low speeds of the piston, is rigidly related to the size of the low-flow port and cannot be adjusted on the basis of a desired response for the vehicle in relation to different kinds of unevenness of the road.

Also, the high number and variety of shutter disks forming the stack causes the operation of assembling the valve unit to be complex and error-prone.

Therefore, a main object of the present invention is to provide a shock absorber piston, particularly for wheel suspensions of vehicles, which incorporates a valve unit having a dynamic response which is accurately and flexibly adjustable to attain different responses of the vehicle in relation to different kinds of unevenness of the road.

Another object of the invention is to provide a piston incorporating a valve unit with a lower number of components with respect to the known valve units such as the above-mentioned one, for higher reliability and lower risk of errors when assembling the valve.

The above objects and other aims and advantages that will better appear from the following description are achieved by a piston having the features recited in claim 1, while the other claims state other advantageous, unessential features of the invention.

The invention will now be described in more detail with reference to a few preferred, non-exclusive embodiments shown by way of non-limiting example in the attached drawings, wherein:
Fig. 1 is a diagrammatical, broken-away side view of a general shock absorber cylinder for wheel suspensions of vehicles;
Fig. 2 is an exploded, perspective view of the piston according to the invention;
Fig. 3 is a view in axial cross-section of the piston according to the invention;
Fig. 4 is a view in axial cross-section of a part of the piston according to the invention;
Fig. 5 is an illustrative diagram showing the damping force of a shock absorber provided with the piston according to the invention while extending, as a function of the maximum extension speed;
Fig. 6 is a view in axial cross-section of a second embodiment of the piston according to the invention;
Fig. 7 is an exploded, perspective view of the piston of Fig. 6;
Fig. 8 is a view in axial cross-section of a third embodiment of the piston according to the invention.

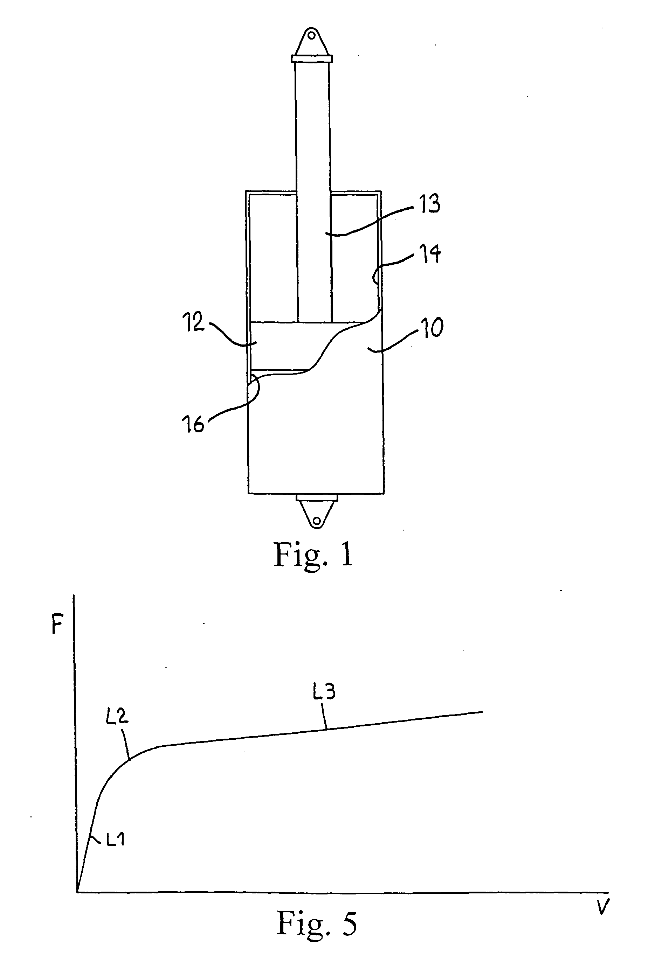

With initial reference to Fig. 1, a general shock absorber for wheel suspensions of vehicles comprises a hydraulic cylinder 10 filled with oil (not shown) with a piston 12 that is sealingly slidable therein and is supported on a piston rod 13. Piston 12 separates the cylinder into a first chamber 14 (on the side of the piston rod), which is pressurized when cylinder 10 is extended, and a second chamber 16, which is pressurized when cylinder 10 is withdrawn. Piston 12 incorporates a valve assembly through which the fluid is drained from one chamber to the other chamber when the piston slides within the cylinder. Cylinder 10 is operatively connectable to the wheel suspension of the vehicle (not shown) in a way known per se, to be extended or withdrawn in relation to the fluctuations and jerks of the vehicle when running on the road.

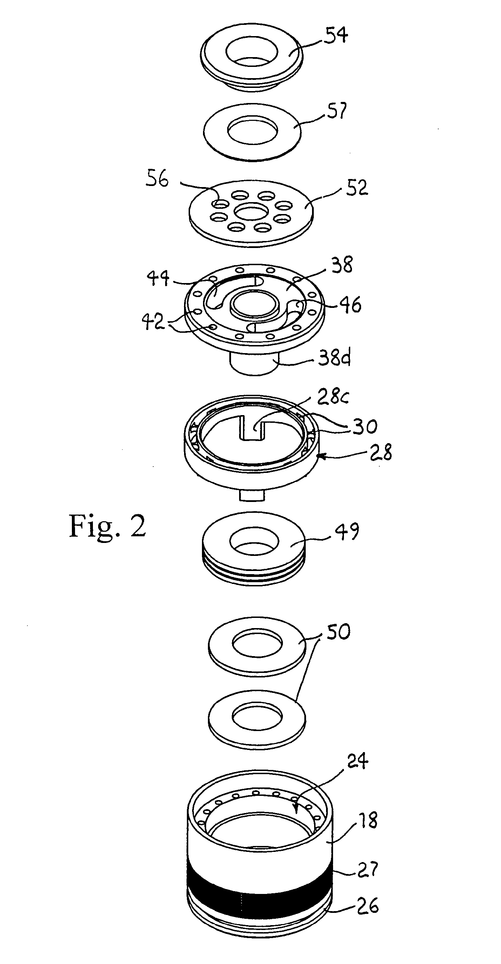

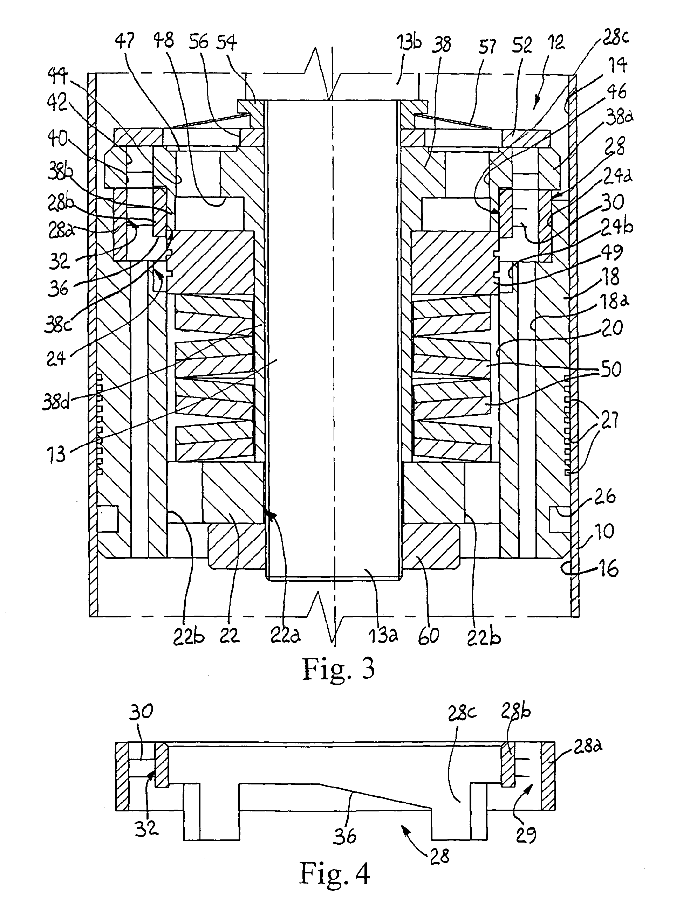

With particular reference now to Figs. 2, 3, piston 12 comprises a cylindrical housing 18 having an axial cavity 20 and a bottom 22 adjacent to second chamber 16. Bottom 22 has an axial opening 22a engaged by the lower end 13a of piston rod 13, and a set of longitudinal openings 22b through which the axial cavity is in fluid communication with second chamber 16. Axial cavity 20 has a two-step annular seat 24 extending along its upper rim. Two-step annular seat 24 has an outer section 24a that is larger in diameter and an inner section 24b that is smaller in diameter. The outer skirt of cylindrical housing 18 is carved with a groove 26, in which is receivable a seal ring (not shown), as well as with a dense array of circumferential grooves 27 forming a labyrinth seal with respect to cylinder 10. Passages in form of longitudinal through holes 18a are made in the cylindrical wall of housing 18 from the bottom of the outer section 24a of annular seat 24 to second chamber 16.

A flow-regulation ring 28 (shown alone in Fig. 4) is received within annular seat 24. Flow-regulation ring 28 has an outer cylindrical wall 28a engaging the outer section 24a of annular seat 24, as well as an inner cylindrical wall 28b, which projects downwardly to engage the inner section 24b of annular seat 24, and has an inner cylindrical skirt 28c. An annular passage 29 aligned to longitudinal through holes 18a is formed between outer cylindrical wall 28a and inner cylindrical wall 28b (Fig. 4), the latter being bridged to each other by thin radial bridges 30 defining large ports 32 which allow the fluid to flow through annular passage 29.

Inner cylindrical wall 28b of flow-regulation ring 28 has four profiled cuts 36 extending from a middle section of the wall to the lower end of inner cylindrical wall 28b.

Housing 18 is closed at its upper end by a cap 38 surrounding piston rod 13. Cap 38 has a radially projecting portion 38a that axially abuts against flow-regulation ring 28, and a cylindrical, middle portion 38b which projects into flow-regulation ring 28 and has a transverse surface 38c near the uppermost section of profiled cuts 36. A tube 38d surrounding piston rod 13 axially projects from transverse surface 38c to bottom 22 of the housing. A circumferential groove 40 aligned to annular passage 29 of flow-regulation ring 28 is made on the lower surface of radially projecting portion 38a. Longitudinal outlets such as 42 project from groove 40. A pair of bean-shaped intake ports 44, 46 flowing into flow-regulation ring 28 are longitudinally bored in cylindrical middle portion 38b. Bean-shaped intake ports 44, 46 terminates at their ends into respective circumferential depressions 47, 48 which are made on the upper surface of cap 38 and on transverse surface 38c respectively.

A cylindrical shutter 49 surrounding tube 38d is sealingly slidable within inner cylindrical skirt 28c of flow-regulation ring 28, and is subjected to the pressure of first chamber 14 via bean-shaped intake ports 44, 46. Shutter 49 is elastically biased against transverse surface 38c by a stack of preloaded Belleville washers 50 that abut against bottom 22.

A shutter disk 52 is axially clamped between cap 38 and a collar 54 resting on a shoulder 13b of rod 13. Shutter disk 52 has holes such as 56 aligned to circumferential depression 47 on cap 38. A Belleville washer 57 is arranged between shutter disk 52 and collar 54 and elastically biases shutter disk 52 against cap 38 along a middle diameter of shutter disk 52.

The valve assembly is tightened between shoulder 13b and a nut 60 that is screwed onto lower end 13a of piston rod 13, which is threaded to this purpose.

The operation of the valve assembly will be now described.

During the so-called "bouncing" stage, in which the cylinder is extended, first chamber 14 is pressurized. The pressurized oil biases cylindrical shutter 49 via holes 56 and bean-shaped intake ports 44, 46. When the force generated by the pressurized fluid exceeds the preload of Belleville washers 50, cylindrical shutter 49 starts lowering of an initial span without uncovering profiled cuts 36. When the pressure is further increased, cylindrical shutter 49 starts uncovering profiled cuts 36, thereby allowing the oil to be drained into second chamber 16 via profiled cuts 36, annular passage 29 and longitudinal through holes 18a. In such operative condition, the valve therefore acts to control the open area of profiled cuts 36 to maintain cylindrical shutter 49 balanced between the force exerted by the preloaded springs 50 and the force exerted by the pressurized fluid.

As well known to the person skilled in the art from the traditional laws of physics, in a general shock absorber cylinder, for equal speeds of the piston, the pressure in the pressurized chamber and, therefore, the damping force, is decreased when the draining port on the piston is increased. Thus, by changing the profile of profiled ports 36 and, therefore, the opening law of the latter as a function of the lowering motion of cylindrical shutter 49, for equal geometrical features and elastic features of the shutter and of the springs respectively, the characteristic curve of the force exerted by the piston as a function of the piston speed may be changed as desired.

During the withdrawing stage of the piston, second chamber is pressurized. The pressurized fluid in second chamber 16 biases shutter disk 52 via longitudinal through holes 18a, annular passage 29 and outlets 42 on cap 38, against the force exerted by Belleville washer 57 and by the stiffness of the shutter disk. The fluid pressure causes the shutter disk to bend, thereby allowing the fluid to be drained into first chamber 14.

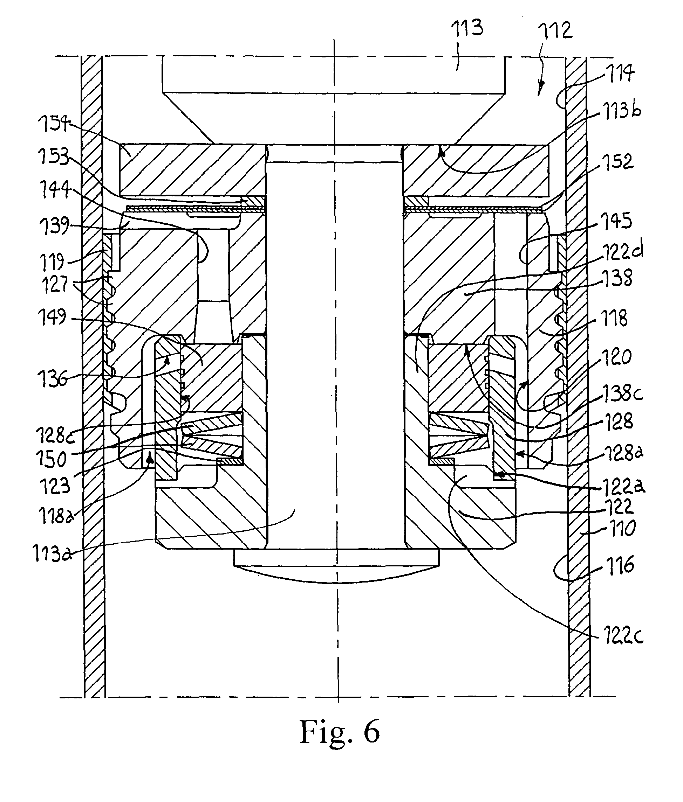

Fig. 5 is an illustrative diagram concerning a shock absorber according to this invention, in which is shown the damping force of the shock absorber while extending as a function of the extension speed. Such diagram is calculated by subjecting the shock absorber to extending/withdrawing cycles of a sinusoidal type, at different frequencies. The maximum speed V of the piston in a cycle is given on the x-axis, at a predetermined frequency, while the maximum force F opposed by the shock absorber is given on the y-axis, which maximum force is substantially reached when the piston reaches the above maximum speed. The curve has an initial, steeply sloping span L1, a connecting span L2, and a final, slightly sloping, linearly increasing span L3. Unlike the known, traditional shock absorber valves, in which the initial span L1, though with different slopes, rises rigidly with exponential trend, because the resistance is provided by an oil flow through a port having a predetermined size, the valve according to this invention allows the shape of the initial span L1 to be changed as desired, because the oil flow changes as a function of the profile of the ports and of the law of motion of the shutter. These two parameters are chosen as desired by the designer of the valve depending on the hydraulic, damping characteristic that is desired for the valve.

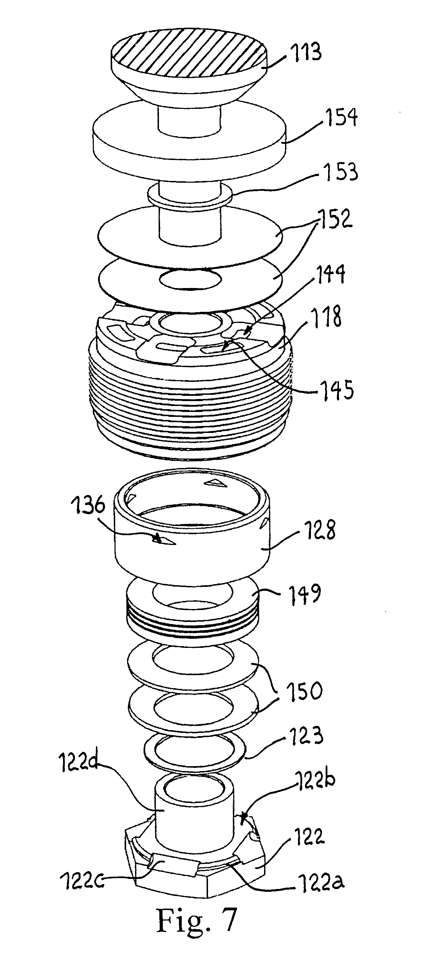

In a second embodiment of the invention, as shown in Figs. 6, 7, piston 112 comprises a cylindrical housing 118 having an axial cavity 120 closed at its upper end by a transverse wall 138 surrounding piston rod 113a and having a circumferential abutment 138c projecting downwardly from its inner surface. Transverse wall 138 has longitudinal intake holes such as 144 which are aligned to circumferential abutment 138c, as well as through ports such as 145 which are arrayed along an outer circumference. A seal lining of teflon 119 is fitted on cylindrical housing 118 and restrainedly engages a circumferential toothing 127 made on the outer skirt of the cylindrical housing. Radial grooves 139 open to intake ports 144 are made on the outer surface of the transverse wall 138.

A flow-regulation ring 128 is received within annular seat 120, surrounds circumferential abutment 138c and abuts against transverse wall 138. Flow-regulation ring 128 has an outer cylindrical skirt 128a, which is smaller in diameter than axial cavity 120, so that an annular gap 118a is defined therebetween, as well as an inner cylindrical skirt 128c. Four profiled cuts such as 136 are made on the wall of flow-regulation ring 128.

Housing 118 is closed at its lower end by a cover 122 consisting of a nut surrounding lower end 113a of piston rod 113. Cap 122 axially abuts against flow-regulation ring 128 and has a cylindrical centering portion 122a that projects into flow-regulation ring 128 in close fit and terminates with a transverse surface 122b with a spacer ring 123 resting thereon. Radial grooves 122c are cut on the surface of cap 122 which abuts against flow-regulation ring 128. The radial grooves radially extend along a span of cylindrical centering portion 122a to define a draining channel from the inside of flow-regulation ring 128 into second chamber 116.

A tube 122d surrounding piston rod 113a axially projects from transverse surface 122b to transverse wall 138.

A cylindrical shutter 149 surrounding tube 122d is sealingly slidable within inner cylindrical skirt 128c of flow-regulation ring 128 and is subjected to the pressure of first chamber 114 via longitudinal intake ports 144. Shutter 149 is elastically biased against circumferential abutment 138c by a stack of preloaded Belleville washers 150 that abut against spacer ring 123 and, therefore, against transverse surface 122b of cap 122.

A stack of elastic disks 152 are axially clamped between transverse wall 138 and a collar 154 resting on a shoulder 113b of piston rod 113, with a washer 153 interposed therebetween.

The valve assembly is tightened between shoulder 113b and lower end 113a of piston rod 113, which is caulked to this purpose.

The operation of the valve assembly according to the above-described alternative embodiment is similar to the operation of the first embodiment of the invention.

During the "bouncing" stage, first chamber 114 is pressurized. The pressurized oil biases cylindrical shutter 149 via radial grooves 139 and longitudinal intake holes 144. When the force applied by the pressurized fluid exceeds the preload of Belleville washers 150, cylindrical shutter 149 starts lowering by an initial span without uncovering profiled cuts 136. When the pressure is further increased, cylindrical shutter 149 starts uncovering profiled cuts 136, thereby allowing the oil to be drained into second chamber 116 via profiled cuts 136 and annular passage 118a. In such operative condition, the valve therefore acts to control the open area of profiled cuts 136 to maintain cylindrical shutter 149 balanced between the force exerted by the preloaded springs 150 and the force exerted by the pressurized fluid.

During the withdrawing stage of the piston, second chamber 116 is pressurized. The pressurized fluid in second chamber 116 biases elastic disks 152 via annular passage 118a and through ports 145. The fluid pressure causes elastic disks 152 to bend, thereby allowing the fluid to be drained into first chamber 114.

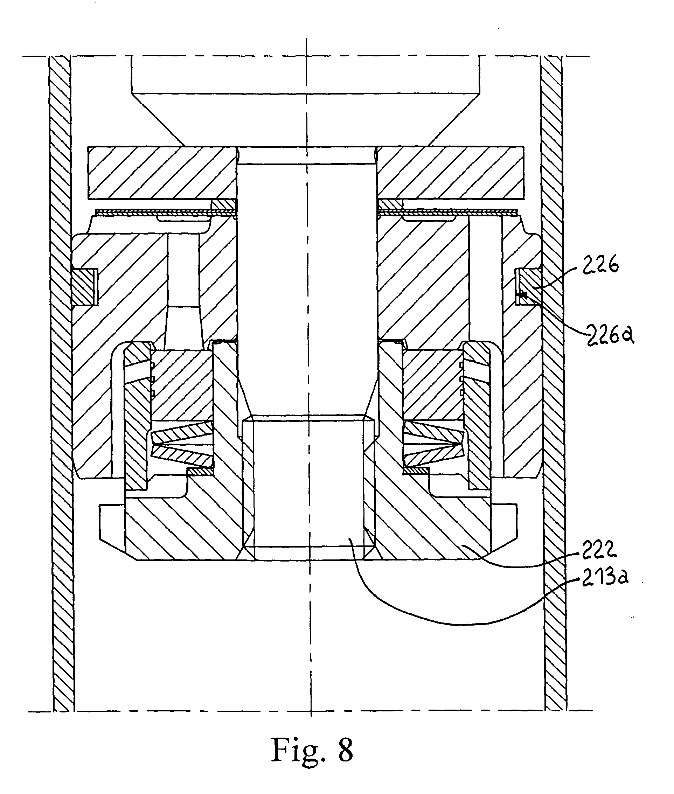

A third embodiment of the invention is shown in Fig. 8 and is distinguished from the previous embodiment in that cap 222 is screwed onto lower end 213a of piston rod 213, which is threaded to this purpose. Also, the outer skirt of the piston is smooth and its seal within the cylinder is provided by a ring 226 received in a corresponding groove 226a.

A few embodiments of the invention have been described herein, however many changes may be made by a person skilled in the art within the scope of the inventive concept. In particular, the geometrical features of the various parts, such as, e.g., the active area of cylindrical shutter 49, 149, may be changed within the inventive concept on the basis of design choices. Also, Belleville washers 50, 150 may be replaced with different known elastic means, such as elastomeric elements. Also, though transverse surface 38c and circumferential abutment 138c of the above-described embodiments define an abutment just above the uppermost section of profiled ports 36, 136, they can also be located just below them to define a drainage always open for the oil, in order to achieve a different response of the valve in conditions of low pressure. Also shutter disk 52 and elastic disks 152 may be replaced with other equivalent shutting means. Also, it is evident that, in the above described system, various arrangements can be employed to improve the operation of the shock absorber, such as different linings on the outer skirt of the piston.

## Claims

1. A piston for shock absorber cylinders, the piston being sealingly slidable within a shock absorber cylinder (10) to separate it into two opposing chambers (14, 114, 16, 116), **characterized in that** it comprises a substantially cylindrical housing (18, 118) having fluid communication passages (18a, 144) between said two chambers, a flow-regulation ring (28, 128) which is coaxially mounted on the housing (18, 118) and has at least one profiled cut (36, 136) interposed in series with respect to said passages, and a shutter (49, 149), which is sealingly slidable within the flow-regulation ring (28, 128) to gradually shut said at least one profiled cut (36, 136), and is subjected to the pressure of one first of said chambers (14, 114) against elastic means (50, 150).

2. The piston of claim 1, **characterized in that** said passages are channels (18a) extending from the second of said chambers (16) to an annular seat (24) adjacent to the first chamber (14), in which said flow-regulation ring (28) is received, said at least one profiled port (36) being open to said longitudinal channels (18a).

3. The piston of claim 2, **characterized in that** a cap (38) axially abuts against the flow-regulation ring (28) on the side of the first chamber (14) and has intake ports (44, 46) for fluid communication between the first chamber (14) and the core of the flow-regulation ring (28).

4. The piston of claim 3, **characterized in that** said cap (38) has outlet ports (42) engaged by shutter means (52) that are elastically yieldable towards the first chamber (14), said flow-regulation ring (28) having an annular passage (29) for connecting said longitudinal holes (18a) to said outlet ports (42).

5. The piston of one of claims 3 or 4, **characterized in that** said cap (38) has a cylindrical portion (38b) projecting into the flow-regulation ring (28) and terminating near the profiled cuts (36) with a transverse surface (38c) forming an abutment for said shutter (49).

6. The piston of claim 5, **characterized in that** said transverse surface (38c) is located near the uppermost section of the profiled cuts (36).

7. The piston of claim 6, **characterized in that** said annular seat (24) has an outer section (24a) that is larger in diameter and an inner section (24b) that is smaller in diameter, and **in that** said flow-regulation ring (28) has an outer cylindrical wall (28a) engaging the outer section (24a) of the annular seat (24), as well as an inner cylindrical wall (28b) projecting into the inner section (24b) of the annular seat (24) and having an inner cylindrical skirt (28c) in which said shutter (49) is slidably received.

8. The piston of claim 7, **characterized in that** said annular passage (29) is defined between said outer cylindrical wall (28a) and inner cylindrical wall (28b).

9. The piston of any of claims 4 to 8, **characterized in that** said shutter means comprise a shutter disk (52) which is elastically biased against cap (38) to close the outlet ports (42) and is open (56) to said longitudinal holes (44, 46).

10. The piston of claim 9, **characterized in that** said shutter disk (52) is attached to the cap (38) along an inner diameter.

11. The piston of claim 1, **characterized in that** said flow-regulation ring (128) axially abuts against the housing (118) on the side of the second chamber (116) and said passages are intake ports (144) extending from the first of said chambers (114) into flow-regulation ring (128).

12. The piston of claim 11, **characterized in that** said housing (118) has a salient circumferential abutment (138c) for said shutter (149).

13. The piston of claim 12, **characterized in that** said salient circumferential abutment (138c) is located near the uppermost section of profiled cuts (136).

14. The piston of any of claims 11 to 13, **characterized in that** said housing (118) has through ports (145) extending from the first of said chambers (144) to the second of said chambers (116) outside the flow-regulation ring (128), and engaged by shutter means (152) that are elastically yieldable towards the first chamber (114).

15. The piston of claim 14, **characterized in that** said shutter means (152) consist of a stack of elastic disks (152) which are axially clamped along an inner diameter thereof.

16. The piston of any of claims 11 to 15, **characterized in that** the flow-regulation ring (128) is axially clamped between the housing (118) and a cap (122) against which said elastic means (150) are abutted.
